# EUROPEAN PATENT SPECIFICATION

(11) **EP 3 093 625 B1**
(45) Date of publication and mention of the grant of the patent: **12.09.2018**
(21) Application number: 16168668.8
(22) Date of filing: 09.05.2016
(51) Int. Cl.: G01D 11/24, G01D 11/30, G01P 3/487

(54) **GEAR MODULE, ANGLE SENSOR AND VEHICLE**
GETRIEBEMODUL, WINKELSENSOR UND FAHRZEUG
MODULE D'ENGRENAGE, CAPTEUR D'ANGLE ET VÉHICULE

(30) Priority: 13.05.2015 CN 201520304841 U
(43) Date of publication of application: 16.11.2016
(73) Proprietor: ROBERT BOSCH GMBH, 70442 Stuttgart (DE)
(72) Inventor: Sun, Dong, 215021 Suthou Jiangsu (CN); Guo, Dachuan, 215021 Suzhou Jiangsu (CN); Tong, Baichao, 215021 Suzhou Jiangsu (CN); Yang, Chao, 215021 Suzhou Jiangsu (CN)

(56) References cited:
- WO-A1-2009/086831
- CN-U- 202 837 318
- CN-U- 204 377 050

## Description

The present invention relates to a sensor, especially to a gear module for measuring a rotatable object's rotational angle, an angle sensor and a vehicle.

### BACKGROUND

A conventional angle sensor generally comprises a top housing and a bottom housing, and a main gear, a first gear, a second gear and a circuit board which are installed within the top and bottom housings. Usually, the sensor further comprises a first magnet disposed on the first gear, a second magnet disposed on the second gear, a first giant magnetoresistance sensing chip corresponding to the first magnet and disposed on the circuit board, a second giant magnetoresistance sensing chip corresponding to the second magnet and disposed on the circuit board, and a microprocessor connected to both the first and second giant magnetoresistance sensing chips. Take an angle sensor for a steering wheel of a vehicle for example. A main rotary shaft of the steering wheel of the vehicle drives the main gear to rotate. The first and second gears are rotated by the main gear due to their engagement. When the gears are rotated, the first and second magnetoresistance sensing chips can compute the first gear's rotational angle and the second gear's rotational angle by measuring variations in a magnetic field. The main gear rotates an angle corresponding to the steering wheel, such that the angle sensor can determine the steering wheel's rotational angle and can output a signal representing the determined rotational angle by means of a Controller Area Network (CAN) bus. This kind of angle sensor has higher precision, is high quality and thus is widely used.

The main gear is secured on the main rotary shaft of the steering wheel and is rotated together with it. Therefore, when the main rotary shaft of the steering wheel is resized, the top and bottom housings, and the main gear of the angle sensor should be also resized. In the meanwhile, relative positions of the first, second and main gears, and members in the circuit board should be also readjusted.

Therefore, the conventional angle sensor need be improved.

WO 2009/086831 A1 describes a linear actuator comprising a motor, a spindle, a spindle nut and a first gear wheel that rotates during a travel of the spindle nut on the spindle. For position determination of the spindle nut on the spindle, the first gear wheel engages a second gear wheel with a magnet ring. A printed circuit board with a Reed-switch of a Hall-Sensor is located so close to the second gear wheel, that a number of rotations of the magnet ring is detectably by the Hall-Sensor, wherein the number of rotations of the magnet ring is proportional to the travel of the spindle nut on the spindle.

### SUMMARY OF THE UTILITY MODEL

It is an objective of the present invention to overcome at least one of the above-mentioned shortcomings and to propose an angle sensor and a vehicle, which are simple in configuration, can be manufactured, assembled and installed conveniently, and are versatile, widely applicable and strongly extensible.

The present invention provides an angle sensor with the features of claim 1 and a vehicle with the features of claim 5.

Each gear module of the inventive angle sensor is designed in a modular manner such that it can be used to measure any type of rotatable object's rotational angle and can constitute an angle sensor for any rotatable object, which is simple in configuration, can be manufactured, assembled and installed conveniently, and is versatile, widely applicable and strongly extensible.

Preferably, the magnet of each gear module is provided on an axial center part of its gear.

Preferably, the sensing element of each gear module is one of a giant magnetoresistance (GMR) sensing element, an anisotropic magnetoresistance (AMR) sensing element, a Hall angle sensing element, an optical sensing element, an electric sensing element, a capacitive sensing element or a resistive sensing element.

Preferably, the gears of the at least two gear modules have various numbers of teeth and engage with the main gear respectively.

Preferably, a protective housing is provided on the outside of the main rotary shaft to enclose the main rotary shaft and the main gear, and the protective housing is formed with at least two securing ducts in which the at least two gear modules are secured respectively.

Preferably, the vehicle further comprises a control unit which receives and analyzes an output signal from the gear module to determine an angle by which the main rotary shaft of the steering wheel rotates.

### BRIEF DESCRIPTION OF THE DRAWINGS

Fig. 1 is a perspective view schematically illustrating an angle sensor according to a preferred embodiment of the invention;
Fig. 2 is a perspective view schematically illustrating a gear module of the angle sensor in Fig. 1;
Fig. 3 is an exploded view schematically illustrating the gear module of the angle sensor in Fig. 2;
Fig. 4 is a schematic view illustrating how gears of the angle sensor in Fig. 1 are
Fig. 5 is an exploded and assembly view schematically illustrating the angle sensor in Fig. 1.

### DETAILED DESCRIPTION OF PREFERRED EMBODIMENTS

Preferred embodiments of the invention will be explained with respect to concrete examples. It should be understood by a person skilled in the art that all embodiments are illustrative and are not deemed to make any limitation to the invention.

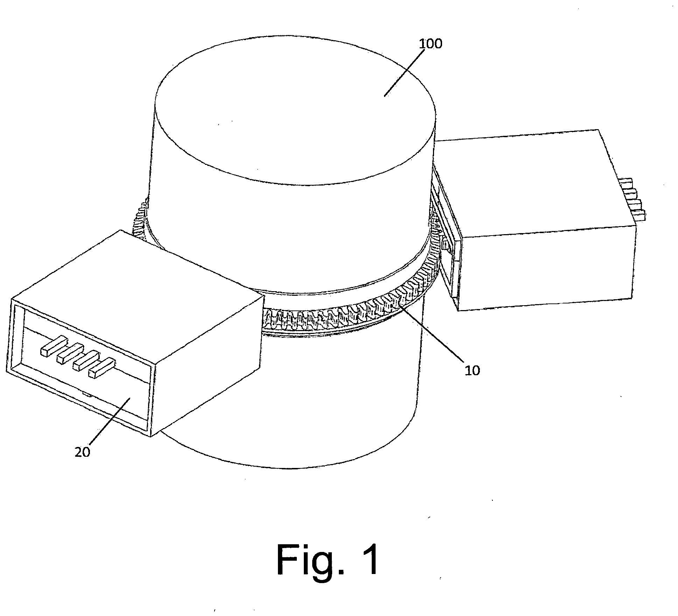

See Fig. 1. Fig. 1 is a perspective and assembly view schematically illustrating that an angle sensor according to a preferred embodiment of the utility model is assembled with a rotatable object. The assembled angle sensor according to the preferred embodiment of the utility model is used to measure the rotatable object's rotational angle, and comprises a main gear 10 and at least two gear modules 20 which engage with the main gear. In the embodiment, two gear modules 20 are adopted for example to explain the angle sensor according to the utility model. In alternative embodiments, three, four or more gear modules 20 can be used depending on actual demand.

The main gear 10 is secured on the rotatable object and is adapted to rotate together with the rotatable object. In the embodiment, the rotatable object is a main rotary shaft 100 of a steering wheel of a vehicle.

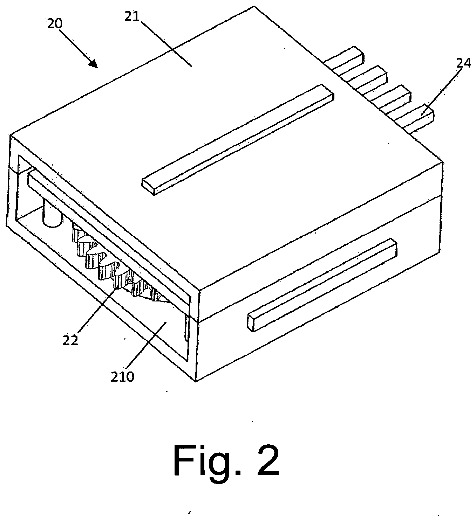

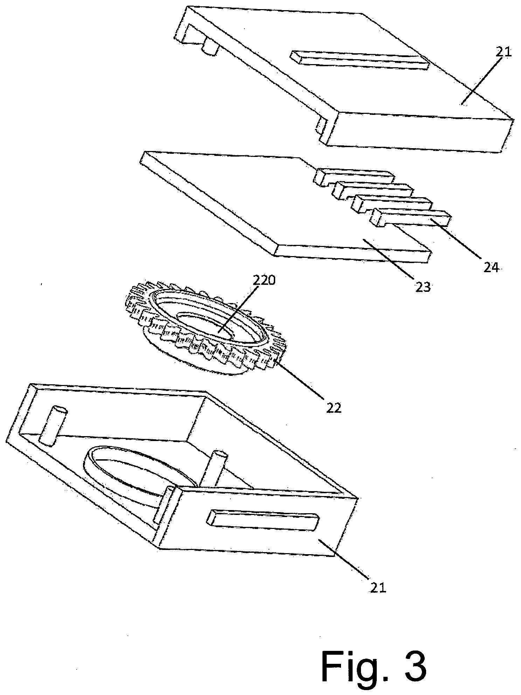

See Fig. 2 and Fig. 3. Fig. 2 is a perspective view schematically showing the gear module of the angle sensor illustrated by Fig. 1, and Fig. 3 is an exploded view schematically showing the gear module of the angle sensor illustrated by Fig. 1. The gear module 20 comprises a housing 21, a gear 22 and a circuit board 23. A receiving chamber is provided in the housing 21 which is provided with a gear opening 210. The gear 22 is rotatably installed in the receiving chamber of the housing 21, and is partially exposed out of the gear opening 210 such that the gear can engage with the main gear 10 and can be rotated with the rotation of the main gear 10. It is noted that in order to measure an angle by which the rotatable object rotates more precisely, the gears 22 of the two gear modules 20 have various numbers of teeth.

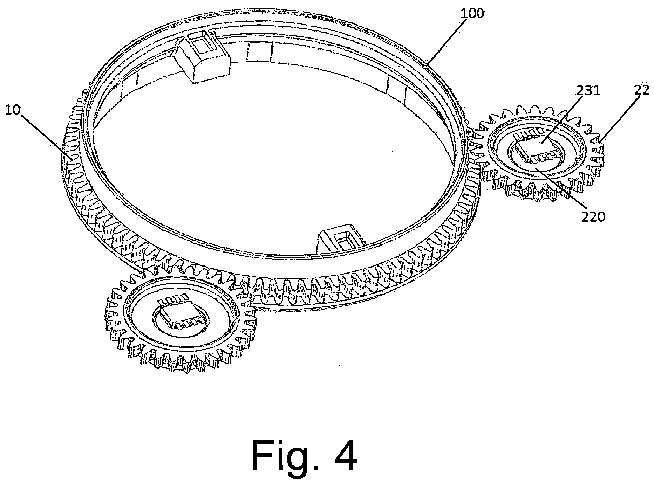

The gear module 20 further comprises a magnet 220 which can be disposed at any suitable location on the gear 22. Optionally, the magnet 220 is disposed on an axial center part of the gear 22. The circuit board 23 is secured in the receiving chamber of the housing 21. A sensing element 231 (Fig. 4) is provided on the circuit board such that the sensing element is matable with the magnet 220. The sensing element is used to induce variations of a magnetic field such that a magnetic curve, which is generated by the magnet 220, can be identified to measure an angle by which the gear 22 rotates. In the present embodiment, the sensing element 231 is a giant magnetoresistance (GMR) sensing element. In alternative embodiments, the sensing element 231 can be other angle sensing elements, such as an anisotropic magnetoresistance (AMR) sensing element, a Hall angle sensing element, an optical sensing element, an electric sensing element, a capacitive sensing element or a resistive sensing element. Depending on the type of the applied sensing element, the gear 22 can be adapted as required. The gear 22 can be replaced by a coding disk, and a coding system is adequately provided.

In the present embodiment, the gear module 20 further comprises a connecting interface 24 for connecting a transmission line (for example a CAN bus or an LIN bus). A control unit (not shown) of the vehicle, for example an ESP control unit is provided with an analyzing circuit. The gear module 20 is connected to the control unit by the connecting interface 24 such that an output signal from the sensing element 231 can be transmitted to the control unit. By analyzing the output signal from the sensing element 231 (that is to say, the control unit receives and analyzes the output signal from the gear module 20), the analyzing circuit determines an angle by which the main rotary shaft 100 of the steering wheel rotates. In an alternative embodiment, the circuit board 23 is directly provided with a separated analyzing circuit for processing the output signal from the sensing element 231 and transmitting the signal to the control unit of the vehicle by a transmission line; and the control unit analyzes signals from the different gear modules 20 and determines the angle by which the main rotary shaft 100 of the steering wheel rotates. Depending on actual demand, an analyzing circuit can be also provided in another control unit of the vehicle (such as a body control unit, an air bag control unit or the like).

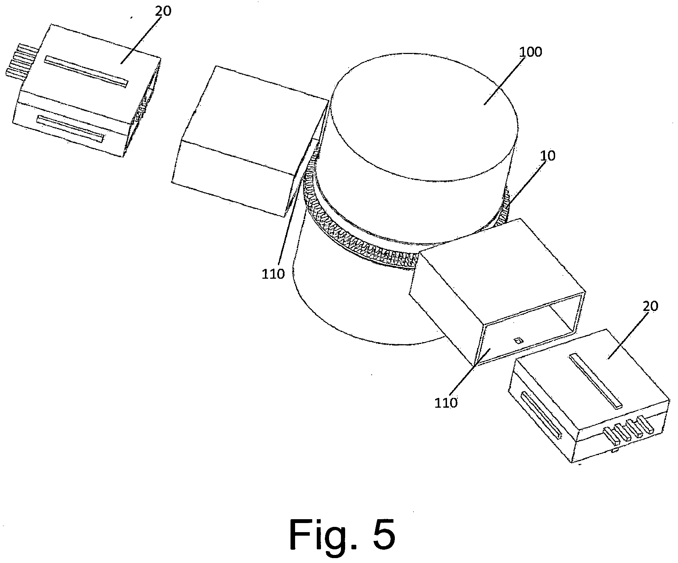

In operation, the main gear 10 is secured on the rotatable object such that the gears 22 of the gear modules 20 engage with the main gear 10. See Fig. 4 and Fig. 5. Fig. 4 is a schematic view illustrating how the gears of the sensor engage with each other, and Fig. 5 is an exploded and assembly view showing the angle sensor illustrated by Fig. 1. Take an angle sensor for the steering wheel of the vehicle for example. When the sensor is installed, the main gear 10 is secured on the main rotary shaft 100 of the steering wheel of the vehicle. The main rotary shaft 100 is usually, on its outside, provided with a protective housing (not shown) enclosing the main rotary shaft 100 and the main gear 10. The protective housing is formed with two securing ducts 110 in which the two gear modules 20 can be secured respectively such that the gears 22 engage with the main gear 10. In the present embodiment, the main gear 10 and the gears of the two gear modules 20 are substantially in the same plane. The gears 22 of the two gear modules 20 can be disposed at any locations along the periphery of the main gear 10. The distance between the two gear modules 20 along the periphery of the main gear 10 can be arbitrary. The two gear modules 20 can be adjacent to each other or be opposite to each other. The main gear 10 is rotated by the main rotary shaft 100 of the steering wheel of the vehicle. Because of engaging with the main gear 10, the gears 22 of the two gear modules 20 are rotated by the main gear. The
gear module is designed in a modular manner such that it can be used to measure any type of rotatable object's rotational angle and can constitute an angle sensor for any rotatable object, which is simple in configuration, can be manufactured, assembled and installed conveniently, and is versatile, widely applicable and strongly extensible.

## Claims

1. An angle sensor used to measure an angle by which a rotatable object rotates, wherein the angle sensor comprises:
a main gear (10) that is adapted to rotate together with the rotatable object when the main gear (10) is secured on the rotatable object; and
at least two gear modules (20), wherein each of the gear modules (20) comprises a housing (21), a gear (22), a magnet (220) provided on the gear (22) and a circuit board (23), wherein the housing (21) is provided with a receiving chamber and a gear opening (210), the circuit board (23) is secured in the receiving chamber of the housing (21) and provided with a sensing element (231) for mating with the magnet (220), and the gear (22) is rotatably installed in the receiving chamber of the housing (21) and is at least partially exposed out of the gear opening (210);
and wherein each gear (22) of the gear modules (20) rotatably engages with the main gear (10).

2. The angle sensor as claimed in claim 1, wherein the magnet (220) of each gear module (20) is provided on an axial center part of its gear (22).

3. The angle sensor as claimed in claim 1, wherein the sensing element (231) of each gear module (20) is one of a giant magnetoresistance (GMR) sensing element, an anisotropic magnetoresistance (AMR) sensing element, a Hall angle sensing element, an optical sensing element, an electric sensing element, a capacitive sensing element or a resistive sensing element.

4. The angle sensor as claimed in claim 1, wherein the gears (22) of the at least two gear modules (20) have various numbers of teeth and engage with the main gear (10) respectively.

5. A vehicle comprising a main rotary shaft (100) of a steering wheel and an angle sensor according to any preceding claim, wherein the main gear (10) of the angle sensor is secured on the main rotary shaft (100) of the steering wheel.

6. The vehicle as claimed in claim 5, wherein a protective housing is provided on the outside of the main rotary shaft (100) to enclose the main rotary shaft (100) and the main gear (10), and the protective housing is formed with at least two securing ducts (110) in which the at least two gear modules (20) are secured respectively.

7. The vehicle as claimed in claim 5, wherein it further comprises a control unit which receives and analyzes an output signal from each of the gear modules (20) to determine an angle by which the main rotary shaft (100) of the steering wheel rotates.

## Patentansprüche

1. Winkelsensor, der verwendet wird, um einen Winkel zu messen, um den sich ein drehbares Objekt dreht, wobei der Winkelsensor umfasst:
ein Hauptzahnrad (10), das angepasst ist, sich zusammen mit dem drehbaren Objekt zu drehen, wenn das Hauptzahnrad (10) an dem drehbaren Objekt befestigt ist; und
mindestens zwei Zahnradmodule (20), wobei jedes der Zahnradmodule (20) ein Gehäuse (21), ein Zahnrad (22), einen Magneten (220), der an dem Zahnrad (22) bereitgestellt ist, und eine Platine (23) umfasst, wobei das Gehäuse (21) mit einer Aufnahmekammer und einer Zahnradöffnung (210) versehen ist, die Platine (23) in der Aufnahmekammer des Gehäuses (21) befestigt und mit einem Sensorelement (231) versehen ist, um mit dem Magnet (220) zusammenzuwirken, und das Zahnrad (22) drehbar in der Aufnahmekammer des Gehäuses (21) installiert ist und mindestens teilweise aus der Zahnradöffnung (210) herausragt;
und wobei jedes Zahnrad (22) der Zahnradmodule (20) drehbar in das Hauptzahnrad (10) eingreift.

2. Winkelsensor nach Anspruch 1, wobei der Magnet (220) jedes Zahnradmoduls (20) an einem axialen Mittelteil seines Zahnrads (22) bereitgestellt ist.

3. Winkelsensor nach Anspruch 1, wobei das Sensorelement (231) jedes Zahnradmoduls (20) eines der folgenden Elemente ist: ein Sensorelement für den Riesenmagnetowiderstand (GMR), ein Sensorelement für den anisotropischen Magnetowiderstand (AMR), ein Hall-Winkel-Sensorelement, ein optisches Sensorelement, ein elektrisches Sensorelement, ein kapazitives Sensorelement oder ein resistives Sensorelement.

4. Winkelsensor nach Anspruch 1, wobei die Zahnräder (22) der mindestens zwei Zahnradmodule (20) verschiedene Zahlen von Zähnen aufweisen und jeweils in das Hauptzahnrad (10) eingreifen.

5. Fahrzeug, das eine Hauptdrehwelle (100) eines Lenkrads und einen Winkelsensor nach einem der vorhergehenden Ansprüche umfasst, wobei das Hauptzahnrad (10) des Winkelsensors an der Hauptdrehwelle (100) des Lenkrads befestigt ist.

6. Fahrzeug nach Anspruch 5, wobei ein Schutzgehäuse an der Außenseite der Hauptdrehwelle (100) bereitgestellt ist, um die Hauptdrehwelle (100) und das Hauptzahnrad (10) zu umschließen, und das Schutzgehäuse mit mindestens zwei Sicherungskanälen (110) gebildet ist, in denen die mindestens zwei Zahnradmodule (20) jeweils befestigt sind.

7. Fahrzeug nach Anspruch 5, das ferner eine Steuereinheit umfasst, die ein Ausgabesignal von jedem der Zahnradmodule (20) empfängt und analysiert, um einen Winkel zu bestimmen, um den sich die Hauptdrehwelle (100) des Lenkrads dreht.

## Revendications

1. Capteur d'angle utilisé pour mesurer un angle duquel un objet rotatif tourne, dans lequel le capteur d'angle comprend:
un engrenage principal (10) qui est adapté pour tourner de concert avec l'objet rotatif lorsque l'engrenage principal (10) est fixé sur l'objet rotatif; et
au moins deux modules d'engrenage (20), dans lequel chacun des modules d'engrenage (20) comprend un boîtier (21), un engrenage (22), un aimant (220) prévu sur l'engrenage (22) et une carte de circuits (23), dans lequel le boîtier (21) est pourvu d'une chambre de réception et d'une ouverture d'engrenage (210), la carte de circuits (23) est fixée dans la chambre de réception du boîtier (21) et est pourvue d'un élément de détection (231) à accoupler à l'aimant (220), et l'engrenage (22) est installé de façon rotative dans la chambre de réception du boîtier (21) et est au moins partiellement exposé hors de l'ouverture d'engrenage (210) ;
et dans lequel chaque engrenage (22) des modules d'engrenage (20) s'engage de façon rotative avec l'engrenage principal (10).

2. Capteur d'angle selon la revendication 1, dans lequel l'aimant (220) de chaque module d'engrenage (20) est prévu sur une partie centrale axiale de son engrenage (22).

3. Capteur d'angle selon la revendication 1, dans lequel l'élément de détection (231) de chaque module d'engrenage (20) est un parmi un élément de détection à magnétorésistance géante (GMR), un élément de détection à magnétorésistance anisotrope (AMR), un élément de détection d'angle à effet Hall, un élément de détection optique, un élément de détection électrique, un élément de détection capacitif ou un élément de détection résistif.

4. Capteur d'angle selon la revendication 1, dans lequel les engrenages (22) desdits au moins deux modules d'engrenage (20) comportent différents nombres de dents et s'engagent avec l'engrenage principal (10), respectivement.

5. Véhicule comprenant un arbre rotatif principal (100) d'un volant de direction et un capteur d'angle selon l'une quelconque des revendications précédentes, dans lequel l'engrenage principal (10) du capteur d'angle est fixé sur l'arbre rotatif principal (100) du volant de direction.

6. Véhicule selon la revendication 5, dans lequel un boîtier de protection est prévu sur le côté extérieur de l'arbre rotatif principal (100) pour envelopper l'arbre rotatif principal (100) et l'engrenage principal (10), et le boîtier de protection est constitué d'au moins deux conduits de fixation (110) dans lesquels lesdits au moins deux modules d'engrenage (20) sont fixés, respectivement.

7. Véhicule selon la revendication 5, dans lequel il comprend en outre une unité de commande qui reçoit et analyse un signal de sortie en provenance de chacun des modules d'engrenage (20) afin de déterminer un angle duquel l'arbre rotatif principal (100) du volant de direction tourne.
